# EUROPÄISCHE PATENTSCHRIFT

(11) **EP 1 113 861 B1**
(45) Veröffentlichungstag und Bekanntmachung des Hinweises auf die Patenterteilung: **07.01.2004**
(21) Anmeldenummer: 99946037.1
(22) Anmeldetag: 26.08.1999
(51) Int. Cl.: B01D 61/02, C13K 5/00

(54) **VERFAHREN ZUR GEWINNUNG VON FESTEN STOFFEN AUS LÖSUNGEN**
METHOD FOR EXTRACTING SOLID SUBSTANCES FROM SOLUTIONS
PROCEDE POUR EXTRAIRE DES SUBSTANCES SOLIDES CONTENUES DANS DES SOLUTIONS

(30) Priorität: 28.08.1998 DE 19839209
(43) Veröffentlichungstag der Anmeldung: 11.07.2001
(73) Patentinhaber: Fraunhofer-Gesellschaft zur Förderung der angewandten Forschung e.V., 80686 München (DE); Westfalia Separator AG, 59302 Oelde (DE)
(72) Erfinder: KÜMMEL, Rolf, D-34286 Spangenberg (DE); ROBERT, Josef, D-48703 Stadtlohn (DE); HAMATSCHEK, Jochen, D-59302 Oelde (DE)
(74) Vertreter: Olgemöller, Luitgard, Dr.
(86) Internationale Anmeldenummer: PCT/EP1999/006279
(87) Internationale Veröffentlichungsnummer: WO 2000/012200

(56) Entgegenhaltungen:
- EP-A- 0 249 368
- EP-A- 0 505 870
- EP-A- 0 642 823
- DE-A- 4 224 690
- GB-A- 1 359 898
- US-A- 5 491 259
- RAMAN L P ET AL: "CONSIDER NANOFILTRATION FOR MEMBRANE SEPARATIONS" CHEMICAL ENGINEERING PROGRESS,US,AMERICAN INSTITUTE OF CHEMICAL ENGINEERS. NEW YORK, Bd. 90, Nr. 3, Seite 68-74 XP000433566 ISSN: 0360-7275
- Y.K. GUU: "Nanofiltration Concentration Effect on the Efficacy of Lactose Crystallisation" JORNAL OF FOOD SCIENCE, Bd. 57, Nr. 3, Mai 1992 (1992-05) - Juni 1992 (1992-06), Seiten 735-739, XP002126233 chicago, us
- DATABASE FSTA [Online] INTERNATIONAL FOOD INFORMATION SERVICE (IFIS), FRANFURT/MAIN, DE GÜNGERICH C ET AL: "Demineralization of whey and whey products." Database accession no. 97-1-06-p0227 XP002126234 & BULLETIN OF THE INTERNATIONAL DAIRY FEDERATION, Bd. 311, 1996, Seiten 11-13, MemBrain GmbH, Harlestr. 1a, 40239 Düsseldorf, Germany

## Beschreibung

Die Erfindung betrifft ein Verfahren zur Gewinnung von organischen Stoffen in Festsubstanz aus mineralsalz- bzw. elektrolythaltigen Lösungen. Sie findet insbesondere Anwendung zur Abscheidung von organischen Stoffen aus dem Bereich der Naturstoffchemie, z.B. von Mono-, Di- und Oligosacchariden, Aminosäuren, Peptiden, Proteinen, beispielsweise aus wäßrigen Lösungen, die bei der Lebensmittelherstellung (Milchprodukte, Kartoffelprodukte usw.) anfallen. Weiterhin kann sie beispielsweise auf die Gewinnung von Wertstoffen der pharmazeutischen Produktion angewendet werden. Die Stoffe können amorph oder kristallin anfallen.

Bei der Verarbeitung von landwirtschaftlich angebauten oder in natürlicher Umgebung wachsenden Pflanzen sowie bei der Aufarbeitung von Prozeßchargen der Lebensmittelproduktion oder der Pharmaproduktion bzw. von biotechnologischen Produktionsprozessen mit dem Ziel, Wertstoffe anzureichern und in einer für die weitere Anwendung ausreichenden Reinheit zu isolieren, fallen sehr häufig komplex zusammengesetzte, flüssige, meist wäßrige Stoffgemische an, die organische neben anorganischen Komponenten enthalten und in aufwendigen Trennstufen weiter behandelt werden müssen. Es ist Stand der Technik, solche Lösungen unter atmosphärischem oder vermindertem Druck einzudampfen und teilweise zur Kristallisation zu bringen, um dann ausgeschiedene Kristalle der weniger löslichen Komponenten, beispielsweise mittels Dekantern, von der verbleibenden Mutterlauge und den darin enthaltenen Stoffen zu trennen. Häufig wird auch der Aussalzeffekt genutzt: Dabei wird die Zielkomponente durch Zufügen einfacher Salze wie Natriumchlorid aus der flüssigen Phase verdrängt und in fester Form abgeschieden. Vielfach ist es auch üblich, die für die zu trennenden Stoffe unterschiedlichen Temperaturabhängigkeiten der Löslichkeit zu ihrer Separierung auszunutzen.

In der DE-OS 4133094 wird ein Verfahren beschrieben, mit dem aus abgereichertem Prozeßwasser der Molkeverarbeitung mittels Nanofiltration ein vorwiegend mineralsalzhaltiges wäßriges Permeat gewonnen wird, das durch Eindampfen in ein diätetisches Mineralsalzgemisch überführt werden kann. Das verbleibende Retentat, das neben wenig Lactose stickstoffhaltige Molkeinhaltsstoffe enthält, wird verworfen. Aus der DE-OS 4212086 ist bekannt, daß bei der Herstellung von Alkalialkansulfonaten durch Sulfochlorierung von Paraffinen eine Ausbeutesteigerung dadurch erzielt werden kann, daß die als eine von zwei flüssigen Phasen anfallende wäßrige Unterlauge durch Nanofiltration aufgetrennt und das erhaltene Retentat in die Verseifungsstufe zurückgeführt wird. In der DE-OS 41 10 050 wird ein Verfahren beschrieben, mit dem feste Farbstoffe dadurch gewonnen werden können, daß die Fällung der Farbstoffe nach Aufkonzentrierung mittels eines Membranprozesses entweder spontan erfolgt oder durch Zugabe von Fällmittel eingeleitet oder vervollständigt wird. Die DE-OS 42 24 690 befaßt sich mit der Abtrennung eines Retentates aus Lösungen, wobei als Membrantrennverfahren eine Hochdruck-Umkehrosmose bei Drücken von etwa 300 bar vorgeschlagen wird. Die Ausfällung des im Retentat befindlichen Stoffes soll dabei vermieden werden; die Aufkonzentrierung soll daher bis maximal in den Bereich der Grenzkonzentration des abzutrennenden Stoffes erfolgen. Das Verfahren dürfte sich für anorganische Salze eignen; als einziges Beispiel für einen abtrennbaren Stoff ist Kochsalz genannt.

Aus der EP-A-0 642 823 ist ebenfalls ein Verfahren zur Gewinnung von festen anorganischen Substanzen aus mineralsalzhaltigen Lösungen bekannt. Die US 5,491,259 beschreibt die Gewinnung einer freien Aminosäure aus einer wässrigen Lösung ihres Salzes.

Die bekannten Verfahren sind trotz vielfacher Anwendung und ausgeklügelter Prozeßbedingungen sehr aufwendig, nicht effektiv und im allgemeinen auch umweltbelastend. Die Eindampfung führt zunächst nicht zu einer Stofftrennung, da Zielprodukt und Nebenbestandteile der Lösung gleichermaßen konzentriert werden und nach der Abscheidung der Zielkomponente Verunreinigungen durch anhaftende Mutterlauge nicht zu vermeiden sind. Außerdem verursacht dieses Verfahren bei temperaturempfindlichen Stoffen, wie sie für die Naturstoffchemie typisch sind, mindestens teilweise Zersetzung der Wertstoffe. Die Fällung des zu gewinnenden Wertstoffs durch Aussalzen mit elektrolytischen Zusätzen verläuft oft unvollständig, führt zu Salzanhaftungen am Produkt und erfordert die nachträgliche Aufarbeitung einer stark salzhaltigen Mutterlauge. Auch die Stofftrennung durch Unterschiede in der Löslichkeit bei unterschiedlichen Temperaturen setzt eine beträchtliche Temperaturbeständigkeit der Wertstoffe voraus, eignet sich aufgrund der meist geringen Trennselektivitäten nur für wenige ausgewählte Fälle und verläuft vielfach unvollständig. Bei dem nach DE-OS 41 10 050 beschriebenen Vorgehen wird entweder von einer Reaktionssuspension ausgegangen, die bereits Feststoffe enthält, oder von einer als Reaktionslösung bezeichneten flüssigen Phase, die durch Aufkonzentrieren in der Membranstufe in eine Suspension überführt wird, so daß in jedem Fall heterogene, aus mindestens zwei Phasen bestehende Gemische im Membranmodul auftreten. Mindestens eine dieser Phasen ist ein Feststoff. Dies führt zu einem verminderten Membranfluß und schlechterer Stofftrennung; darüberhinaus besteht die Gefahr des Verstopfens der Membranporen. Das Verfahren ist daher nur sehr beschränkt verwendbar und eignet sich nicht für kontinuierliche Abläufe.

Allen bekannten Verfahren ist gemein, daß die Ausbeuten an den Zielprodukten objektiv bedingt nicht befriedigend sind und ein beträchtlicher Teil der Wertstoffe mit dem Abwasser abgeführt wird. Die in den zitierten Offenlegungsschriften beschriebenen Nanofiltrationsprozesse stellen technische Grundoperationen der Stofftrennung dar, die lediglich der Abtrennung bzw. Isolierung von Mineralsalzen dienen.

Molke als Nebenprodukt der milchverarbeitenden Industrie enthält Lactose in Konzentrationen von 4 bis 6 Gew.-% neben weiteren organischen Säuren und Calcium-, Natrium- und Kaliumsalzen. Konventionelle Aufbereitungsprozesse konzentrieren die Lösung durch Eindampfung bzw. Reversosmose und trennen die kristallisierte Lactose in Dekantern von der Mutterlauge. Die Konzentrate enthalten bis zu 8 % Salzanteil (Natrium-, Kalium- und Calciumchlorid), der die Kristallisation infolge Komplexbildung behindert und das Endprodukt verunreinigt. Anhaftende Salzreste müssen in Waschstufen entfernt werden. Die Gesamtausbeute an Lactose beträgt etwa 70 %; der Rest gelangt in das Abwasser.

Karatoffeltrockenmasse enthält zu etwa 1,4 Gew.-% Asparagin- und Glutaminsäure und ihre Amide, die zusammen den weitaus größten Teil der monomeren stickstoffhaltigen Substanzen ausmachen. Als Nebenprodukt der Stärkegewinnung aus Kartoffeln fällt ein komplexes Abwassergemisch an, das bisher vorwiegend durch Verregnung entsorgt wird, wodurch erhebliche Belastungen des Grundwassers resultieren.

Der Erfindung liegt daher die Aufgabe zugrunde, feste Wertstoffe der eingangs genannten Art aus häufig stark verdünnten mineralsalzhaltigen bzw. elektrolythaltigen Lösungen mit einem Verfahren abzuscheiden und zu gewinnen, das die Nachteile der bekannten Verfahren vermeidet, umweltschonend und energiesparend betrieben werden kann und zu hohen Ausbeuten und Reinheitsgraden der Zielkomponenten führt.

Die gestellte Aufgabe wird erfindungsgemäß wie im Anspruch 1 definiert dadurch gelöst, daß die den zu gewinnenden Stoff oder diese Stoffe (hier nachstehend auch häufig als Wertstoff(e) bezeichnet) und Salze und/oder weitere Elektrolyte enthaltende Lösung an einer oder mehreren druckgetriebenen Membrantrennstufen, die für mindestens einen Teil der Mineralsalze bzw. Elektrolyte durchlässig sind, die das gewünschte Produkt jedoch zurückhalten, so weit aufkonzentriert wird, daß die theoretische Sättigungskonzentration des organischen Wertstoffs erreicht und überschritten wird. Die Stoffstromführung in der Membranstufe erfolgt dabei derart, daß die zur Erzielung des gewünschten Übersättigungsgrades erforderliche Verweilzeit in den verwendeten Membranmodulen kleiner ist als die vom Übersättigungsgrad, von der Temperatur und von der Retentatzusammensetzung abhängige, der Kristallisation vorgelagerte Induktionszeit. Dies erreicht man durch eine an die Überströmgeschwindigkeit angepaßte Druckdifferenz zwischen Feed- und Permeatseite.Femer sollten von Spacern, Einbauten und Rauhigkeiten weitgehend freie Rohr- oder Kanalsysteme als Membranmoduln verwendet werden. Die erfindungsgemäß üblicherweise eingestellten Übersättigungen hängen vom jeweiligen Stoffsystem ab und betragen zwischen 5 und 300 % der Sättigungskonzentration. In besonders bevorzugten Anwendungen des erfindungsgemäßen Verfahrens werden solche Feststoffe kristallisiert, die aufgrund ihrer chemischen Struktur, insbesondere aufgrund des Gehalts an hydrophilen Gruppen, aus wäßrigen Lösungen nur sehr langsam kristallisieren und zur Übersättigung neigen. Hierzu gehören etwa Mono- und Disaccharide, Hydroxycarbonsäuren, Aminosäuren und zahlreiche weitere Stoffe natürlichen Ursprungs. Die auf der Retentatseite erhaltene Lösung wird von der Membran weggeführt und in eine Fällstufe, z.B. in einen Kristallisationstank, geleitet, in der durch Zugabe von Impfkristallen (Seeding-Kristallen) oder ggf. amorphen Keimbildnern des abzuscheidenden Stoffes die der Keimbildung und/oder Kristallisation vorgelagerte Induktionsperiode beendet und die Abscheidung bzw. Kristallisation initiiert wird. Gegebenenfalls kann die Abscheidung bzw. Kristallisation auch durch Kühlen der Lösung unterstützt werden. Die dabei in fester Form abgeschiedene Zielkomponente wird in an sich bekannter Weise mechanisch abgetrennt. Bevorzugt wird die verbleibende Mutterlauge zwecks weiterer Aufkonzentrierung wenigstens teilweise vor die oder mindestens eine der Membrantrennstufen zurückgeführt. Es ist auch möglich, einen Teil der gesättigten Mutterlauge nach der Abtrennung der Hauptmenge der abgeschiedenen Feststoffe direkt in den Kristallisationstank zurückzuführen. Hierdurch werden dem Kristallisator ständig Impfkristalle zugeführt, die den Abbau der Übersättigung bewirken.

Das Retentat der Membrantrennung wird verworfen oder ggf. weiterbehandelt, um die erforderlichen Abwassemormen zu erfüllen. Wenn die oben beschriebene Kristallisation bzw. Fällung weitgehend vollständig verläuft, ist die Rückführung der Mutterlauge in die Membrantrennung oder die Kristallisationsstufe nicht notwendig, und sie kann entweder direkt mit dem Permeat der Membrantrennung zusammengeführt und mit diesem weiter prozessiert werden oder alternativ auch getrennt behandelt bzw. abgeführt werden.

Wenn die erfindungsgemäß zu behandelnde Lösung Stoffgemische fällbarer, insbesondere kristallisierbarer, gewinnbarer Stoffe enthält, kann eine Vortrennung erfolgen, bei der diese Stoffe voneinander getrennt werden. Beispielsweise kann eine Ultrafiltration vorgeschaltet werden, in der höhermolekulare Stoffe (Proteine oder Polysaccharide) zurückgehalten werden. Das Permeat einer solchen Ultrafiltration enthält dann die weniger hochmolekularen organischen Wertstoffe (z.B. Zucker oder Aminosäuren), zusammen mit Salzen und ggf. weiteren Elektrolyten, und kann anschließend dem erfindungsgemäßen Verfahren zugeführt werden. Das Retentat kann ggf. natürlich ebenfalls erfindungsgemäß weiterbehandelt, d.h. der Fällung bzw. Kristallisation und Abtrennung des oder der Wertstoffe unterworfen werden.

Die Vorteile des erfindungsgemäßen Verfahrens bestehen zum einen darin, daß mittels der Membrantrennstufe(n) eine schonende und einfach zu steuernde Trennung von Wertstoff auf der einen Seite und Salzen bzw. Elektrolyten auf der anderen Seite bei gleichzeitiger Aufkonzentrierung der die organischen Wertstoffe enthaltenden Lösung unter milden Temperaturbedingungen, z.B. Umgebungstemperatur, möglich ist.

Art und Anzahl der Membrantrennstufen, Durchlässigkeit der Membran und transmembraner Druck können leicht an das zu lösende Trennproblem und an die Molekülgröße des zu gewinnenden Wertstoffs angepaßt werden. Der Fachmann kann hier unter einer großen im Handel erhältlichen Zahl von Membranen diejenige(n) mit einem geeigneten cut-off auswählen, mit der die abzutrennende organische Substanz zurückgehalten wird, während Salze und anorganische Säuren/Basen und organische niedermolekulare Säuren permeieren können. Beispiele sind Desal 5 von Osmonics-Desal oder MP 44 von Koch International. Der cut-off liegt vorzugsweise zwischen 150-300 Dalton. Höhermolekulare Stoffe können auch mit z.B. 4000 Dalton-Membranen konzentriert werden.

Bei den verwendeten Filtersystemen sollte bevorzugt darauf geachtet werden, daß ihre inneren Oberflächen möglichst wenig Rauhigkeiten aufweisen. "Geschlossene" Strömungssysteme wie Wickelsysteme mit Spacem sind daher weniger gut geeignet; vorzuziehen sind Offenkanalsysteme wie Plattenmodule oder Rohrmodule. Ähnliches gilt auch für die zu wählenden Rohrsysteme, wobei die zur Verfügung stehenden Materialien, die wie vorliegend bevorzugt lebensmittelgerecht sein müssen, im allgemeinen diese Anforderungen erfüllen.

Die Membranfiltrationsstufen werden bevorzugt als Cross-flow-System gestaltet. Ganz besonders bevorzugt wird das gesamte Verfahren einschließlich der Abtrennung des Wertstoffs als kontinuierliches Verfahren ausgelegt. Selbstverständlich kann das Verfahren aber auch chargenweise (diskontinuierlich) durchgeführt werden.

In einer ebenfalls besonders bevorzugten und wirtschaftlichen Ausführungsform des erfindungsgemäßen Verfahrens erfolgen Stofftrennung und -konzentrierung in einer einzigen Nanofiltrationsstufe bei transmembranen Druckdifferenzen zwischen etwa 8 und 60 bar. Nanofiltrationsmembranen erlauben die Permeation von Wasser, wasserähnlichen Lösungsmitteln und Elektrolyten vom 1:1-Typ, wie etwa Natriumchlorid, Kaliumchlorid, Alkalisalzen von niedermolekularen Monocarbonsäuren, Salzsäure usw.. Zweiwertige Kationen können begrenzt permeieren. Dagegen werden die meist höhermolekularen organischen Wertstoffe im Retentat zurückgehalten und dort angereichert. Diese Anreicherung führt schließlich zur rechnerischen Übersättigung an der Wertstoffkomponente, die aber aufgrund des Fehlens von Impfkeimen erst nach Induktionszeiten von bis zu mehreren Stunden die Fällung, insbesondere Kristallisation auslöst. Die der Fällung vorgelagerte Induktionszeit ist ausreichend, um das Retentat aus der Membranstufe in einen Kristallisator zu überführen und dort die Kristallisation durch Zugabe von Impfkristallen der gewünschten Komponente auszulösen. Es ist bevorzugt, daß wenigstens ein Teil der nach Abtrennung der Wertstoffkomponente verbleibenden, nunmehr an Wertstoff (nur noch) gesättigten Mutterlauge vor mindestens die letzte Membranstufe zurückgeführt und erneut einer Aufkonzentrierung unterzogen wird. Hierdurch kann ein unkontrollierter Austrag von Wertstoff aus dem Verfahren vollständig unterbunden werden, und die Ausbeute wird nahezu quantitativ.

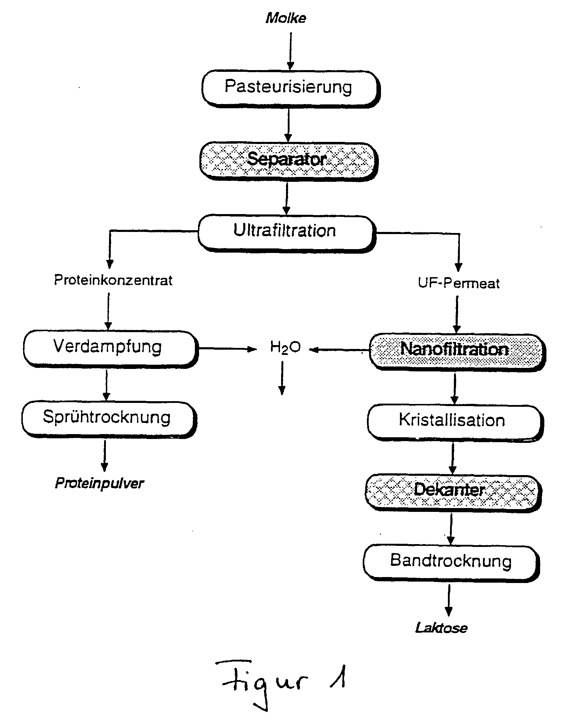

Fig. 1 zeigt schematisch die Stufen des erfindungsgemäßen Verfahrens anhand der Aufarbeitung von Molke. Die vorbehandelte Molke wird in einer Vorstufe einer Ultrafiltration unterworfen. Das proteinhaltige Konzentrat wird in üblicher Weise aufgearbeitet, um Proteinpulver zu gewinnen. Das Salze und Lactose enthaltende Permeat wird dem erfindungsgemäßen Verfahren unterworfen.

Die Erfindung wird nachstehend anhand folgender Ausführungsbeispiele näher erläutert:

### Beispiel 1

### Gewinnung von Lactose aus Molke

Molke wird, gegebenenfalls nach Vorklärung durch Separatoren und Pasteurisierung, einer Ultrafiltration unterworfen, bei der die vorhandenen Proteine entfernt werden. Das resultierende Permeat der Ultrafiltration, das eine Lactosekonzentration von 48 g/l enthält, wird mit aus dem Prozeß rezyklisierter Mutterlauge vermischt und kontinuierlich einer Nanofiltrationsanlage zugeführt, die aus 4 hintereinandergeschalteten Plattenmodulen mit jeweils 20 m² Membranfläche (Desal 5-Membran) aufgebaut ist. Der Feedvolumenstrom von 2.5 m³/h wird bei einem Druck von 60 bar innerhalb einer mittleren Verweilzeit der flüssigen Phase im Membranmodul von etwa 18 Minuten so weit aufkonzentriert, daß 2,1 m³/h Permeat abgezogen werden. Der Lactosegehalt im Konzentrat erhöht sich auf 295 g/l und liegt damit weit oberhalb der Sättigungskonzentration bei der Versuchstemperatur (35°C). Der Lactose-Rückhalt beträgt 98,3 %. Die Rückhalte der einwertigen lonen betragen zwischen 8 und 17%. Die durch Nanofiltration übersättigte Retentat-Phase gelangt in den Kristallisationstank, in dem zugegebene Impfkristalle die Kristallisation auslösen. In der nachfolgenden Dekanterstufe werden die Kristalle von der Mutterlauge getrennt, gewaschen und anschließend getrocknet, gesiebt und konfektioniert. Es werden 109 kg/h kristallisierte Lactose erhalten. Die Mutterlauge mit dem in ihr verbliebenen Lactose-Rest wird teils in den Kristallisationstank, teils vor die Nanofiltrationsstufe zurückgeführt. Die Waschwassermenge, die zur Erzielung sehr geringer Reststoffgehalte in der Lactose notwendig ist, wird so eingestellt, daß die im Dekanter nicht abgetrennten Kristalle nicht aufgelöst werden, sondern im Kristallisator als Impfkristalle eingesetzt werden können. Der Prozeß kann unter konstanten Bedingungen ohne Kristallbildung im Modul über mehrere Tage gefahren werden. Danach wird das Modul wie üblich gereinigt.

Im Ergebnis des erfindungsgemäß betriebenen Verfahrens steigt die Lactose-Ausbeute aufgrund der hohen Rückhalte der NF-Membran für Lactose auf 90 bis 95 %. Daneben wird aufgrund der Abtrennung vor allem einwertiger Kationen und Anionen die Reinheit der Lactose erhöht und der Energiebedarf zur Erzeugung übersättigter Lösungen mit 6 - 8 kW/m³ Molke deutlich gegenüber der Eindampfung (Verbrauch: 15 -45 kW/m³ Molke) reduziert.

### Beispiel 2

### Gewinnung von Aminosäuren aus Kartoffelfruchtwasser

1,6 t/h mikrofiltriertes Kartoffelfruchtwasser mit ca. 3,5 Gew.-% Trockensubstanzgehalt wird in einer als Cross-flow betriebenen Nanofiltrationsstufe bei 30°C und Drücken bis zu 60 bar auf etwa 15% des Ausgangsvolumens eingedickt. Wasser und Salze permeieren durch die Membran, die organischen Wertstoffe werden zurückgehalten. Der CSB-Wert der wäßrigen Phase sinkt von 60.000 mg/l (Feed) auf 2.000 bis 3.000 mg/l (Permeat). Die übersättigte Retentatphase gelangt in den Kristallsationstank, wo sie auf 5 °C abgekühlt und mit Impfkristallen von Asparaginsäure in Kontakt gebracht wird. Die ausgeschiedenen Feststoffe werden in einem Dekanter abgetrennt, die Mutterlauge wird teils in den Kristallisationstank, teils vor die Membranstufe zurückgeführt. Es werden 6,5 kg/h eines Aminosäuregemischs abgeschieden, das zu etwa 65% aus Asparaginsäure besteht sowie Asparagin, Glutaminsäure und Glutamin enthält.

## Patentansprüche

1. Verfahren zur Gewinnung von festen organischen Substanzen aus Lösungen, in denen sie zusammen mit Mineralsalzen und/oder Elektrolyten vorliegen, umfassend die folgenden Schritte:
(a) kontinuierliches Auftrennen der Lösung in ein an Mineralsalz und/oder Elektrolyt angereichertes Permeat und ein an Mineralsalz und/oder Elektrolyt verarmtes, an der oder den zu gewinnenden organischen Substanzen übersättigtes Retentat mit Hilfe einer oder mehrerer druckgetriebenener Membrantrennstufen unter Verwendung von Ultrafiltrations- und/oder Nanofiltrationsmembranen in Membranmodulen, die für mindestens einen Teil der Salze und/oder Elektrolyte durchlässig sind und in denen die Verweilzeit der übersättigten, zu gewinnenden organischen Substanz in der Lösung kleiner ist als die zur Auslösung der Fällung erforderliche Induktionszeit,
(b) Abscheiden der genannten organischen Substanz(en) in einer Fällungsstufe, und
(c) Abtrennen der festen organischen Substanz(en).

2. Verfahren nach Anspruch 1, **dadurch gekennzeichnet, daß** in der/den Membrantrennstufe(n) Ultrafiltrationsmembranen eingesetzt werden und die Membrantrennung unter einem Druck bis zu 8 bar erfolgt.

3. Verfahren nach Anspruch 1, **dadurch gekennzeichnet, daß** in der/den Membrantrennstufe(n) Nanofiltrationsmembranen eingesetzt werden und die Membrantrennung unter einem Druck von 8 bis 60 bar erfolgt.

4. Verfahren nach einem der voranstehenden Ansprüche, **dadurch gekennzeichnet, daß** ein Teil der oder die gesamte bei der Abscheidung der organischen Substanz(en) anfallende Mutterlauge in die oder mindestens die letzte der Membrantrennstufen zurückgeführt wird.

5. Verfahren nach einem der voranstehenden Ansprüche, **dadurch gekennzeichnet, daß** ein Teil oder die gesamte nach dem Abtrennen der Feststoffe zurückbleibende Mutterlauge in die Fällungsstufe zurückgeführt wird.

6. Verfahren nach einem der voranstehenden Ansprüche, **dadurch gekennzeichnet, daß** Kristalle der zu gewinnenden Substanz(en) als Impfkristalle in der Fällungsstufe eingesetzt werden.

7. Verfahren nach Anspruch 6, **dadurch gekennzeichnet, daß** die eingesetzten Impfkristalle mittels Stufe (b) des Verfahrens gewonnen werden.

8. Verfahren nach einem der voranstehenden Ansprüche, **dadurch gekennzeichnet, daß** für die Membrantrennstufen Plattenmodule oder Rohrmodule eingesetzt werden.

## Claims

1. Process for recovering solid organic substances from solutions, in which they are present together with mineral salts and/or electrolytes, comprising the following steps:
(a) continuous separation of the solution into a permeate enriched in mineral salt and/or electrolyte and a retentate depleted in mineral salt and/or electrolyte, supersaturated in the organic substance or substances to be recovered, with the aid of one or more pressure-driven membrane separation stages using ultrafiltration and/or nanofiltration membranes in membrane modules, which are permeable to at least some of the salts and/or electrolyte and in which the residence time of the supersaturated organic substance to be recovered in the solution is shorter than the induction time required to trigger precipitation,
(b) deposition of the said organic substance(s) in a precipitation stage, and
(c) separation of the solid organic substance(s).

2. Process according to claim 1, **characterised in that** ultrafiltration membranes are used in the membrane separation stage(s) and membrane separation takes place under a pressure up to 8 bar.

3. Process according to claim 1, **characterised in that** nanofiltration membranes are used in the membrane separation stage(s) and membrane separation takes place under a pressure of 8 to 60 bar.

4. Process according to one of the preceding claims, **characterised in that** some or all of the mother liquor being produced during deposition of the organic substance(s) is returned to the membrane separation stages or at least the last of the membrane separation stages.

5. Process according to one of the preceding claims, **characterised in that** some or all of the mother liquor remaining after separation of the solids is returned to the precipitation stage.

6. Process according to one of the preceding claims, **characterised in that** crystals of the substance(s) to be recovered are used as seed crystals in the precipitation stage.

7. Process according to claim 6, **characterised in that** the seed crystals used are recovered by means of stage (b) of the process.

8. Process according to one of the preceding claims, **characterised in that** plate modules or tube modules are used for the membrane separation stages.

## Revendications

1. Procédé pour extraire des substances organiques solides de solutions dans lesquelles elles sont présentes conjointement avec des sels minéraux et/ou des électrolytes, qui comprend les étapes suivantes :
(a) séparation continue de la solution en un perméat enrichi en sel minéral et/ou en électrolyte et un rétentat appauvri en sel minéral et/ou en électrolyte, sursaturé en substance ou substances organiques à extraire, à l'aide d'une ou plusieurs étapes de séparation à travers des membranes, conduites sous pression, qui utilisent des membranes d'ultrafiltration et/ou de nanofiltration dans des modules à membranes qui laissent passer au moins une partie des sels et/ou des électrolytes et dans lesquels le temps de séjour de la substance organique en solution sursaturée à extraire est inférieur au temps d'induction nécessaire pour déclencher la précipitation,
(b) précipitation de la ou des substances organiques mentionnées dans une étape de précipitation, et
(c) isolement de la ou des substances organiques solides.

2. Procédé suivant la revendication 1, **caractérisé en ce que** des membranes d'ultrafiltration sont utilisées dans l'étape ou les étapes de séparation à travers des membranes et cette séparation est conduite sous une pression allant jusqu'à 8 bars.

3. Procédé suivant la revendication 1, **caractérisé en ce que** des membranes de nanofiltration sont utilisées dans l'étape ou les étapes de séparation à travers des membranes et cette séparation est conduite sous une pression de 8 à 60 bars.

4. Procédé suivant l'une des revendications précédentes, **caractérisé en ce qu'**une partie ou la totalité de la liqueur-mère obtenue dans la précipitation de la substance ou des substances organiques est recyclée aux étages de séparation à travers des membranes ou au moins au dernier de ces étages.

5. Procédé suivant l'une des revendications précédentes, **caractérisé en ce qu'**une partie ou la totalité de la liqueur-mère restant après l'isolement des substances solides est recyclée à l'étape de précipitation.

6. Procédé suivant l'une des revendications précédentes, **caractérisé en ce que** des cristaux de la substance ou des substances à extraire sont utilisés comme germes cristallins dans l'étape de précipitation.

7. Procédé suivant la revendication 6, **caractérisé en ce que** les germes cristallins utilisés sont obtenus au moyen de l'étape (b) du procédé.

8. Procédé suivant l'une des revendications précédentes, **caractérisé en ce que** des modules à plaques ou des modules à tubes sont utilisés pour les étapes de séparation à travers des membranes.
